Europäisches Patentamt

European Patent Office

Office européen des brevets

(11) Publication number: **0 158 787**
**B1**

# (12) EUROPEAN PATENT SPECIFICATION

(45) Date of publication of patent specification: **27.09.89**

(51) Int. Cl.⁴: **G 21 K 4/00**

(21) Application number: **85101841.6**

(22) Date of filing: **20.02.85**

(54) **Gradient intensifying screen.**

(30) Priority: **22.02.84 JP 30430/84**

(43) Date of publication of application:
**23.10.85 Bulletin 85/43**

(45) Publication of the grant of the patent:
**27.09.89 Bulletin 89/39**

(84) Designated Contracting States:
**BE DE**

(56) References cited:
**EP-A-0 021 174**
**DE-A-3 031 267**
**FR-A-2 495 818**
**US-A-4 362 944**
**US-A-4 368 390**

(73) Proprietor: **KASEI OPTONIX, LTD.**
**12-7, Shibadaimon 2-chome Minato-ku**
**Tokyo 105 (JP)**

(72) Inventor: **Horiuchi, Hidenaga Kasei Optonix,**
**Ltd.**
**Odawara Kojyo No. 1060, Naruda**
**Odawara-shi kanagawa-ken (JP)**
Inventor: **Aoki, Yuji Kasei Optonix, Ltd.**
**Odawara Kojyo No.1060, Naruda**
**Odawara-shi Kanagawa-ken (JP)**
Inventor: **Umemoto, Akio Kasei Optonix, Ltd.**
**Odawara Kojyo No.1060, Naruda**
**Odawara-shi Kanagawa-ken (JP)**

(74) Representative: **Wächtershäuser, Günter, Dr.**
**Tal 29**
**D-8000 München 2 (DE)**

Courier Press, Leamington Spa, England.

## Description

The present invention relates to an intensifying screen as stated in the pre-characterizing portion of claim 1 and to a method for producing said screen as stated in the precharacterizing portion of claim 4.

A gradient intensifying screen as mentioned above is already known from US—A—4,362,944. Said gradient intensifying screen comprising a support, a fluorescent layer formed on the support and a transparent protective layer formed on the fluorescent layer, wherein the transparent protective layer is dyed with a light absorbing dyestuff.

The screen according to US—A—4,362,944 has a uniformly dyed protective layer whereby the light transmission is constant throughout the extension of the protective layer, i.e. over its entire area.

Furthermore, a gradient intensifying screen is known from FR—A—2,495,818 in which the concentration of dyestuff varies from one side of the screen to the other along its thickness.

An intensifying screen is used to fit on an X-ray film (hereinafter referred to simply as "film") to improve the speed in a photographic system in various fields including radiography for medical purposes such as X-ray radiography used for medical diagnosis or radiography for industrial purposes such as non-destructive inspection of materials. Basically, the intensifying screen comprises a support such as a paper or plastic sheet, and a fluorescent layer formed on one side of the support. The fluorescent layer is composed of a binder resin and a phosphor dispersed in the binder and is capable of emitting high luminance light when irradiated with a radiation. The surface of the fluorescent layer (i.e. the surface of the side opposite to the side facing the support) is usually protected by a transparent protective layer made of e.g. cellulose acetate, polymethacrylate or polyethylene terephthalate. There are some intensifying screens in which a light reflecting layer or a light absorbing layer is interposed between the support and the fluorescent layer. For a radiographic operation, an intensifying screen and a film are brought into close contact with each other so that the fluorescent layer faces the film with the transparent protective layer located inbetween. It is common that intensifying screens are disposed on both surfaces of the film in close contact therewith, and in that state, accommodated in a frame which is commonly called a cassette, and used for radiography.

In the diagnosis of a thoracic disease such as lungs cancer by means of chest X-ray radiography in recent years, it is frequently required, for proper diagnosis, to examine not only a lung field but also trachea or bronchus overlaid on the thoracic vertebra or heart. However, in a conventional intensifying screen, the speed is usually uniform over the entire surface, and when the intensifying screen is irradiated with X-rays under the same condition, the amount of the fluorescence emitted from the fluorescent layer is substantially uniform over the entire surface. The speed of the film is also uniform over the entire surface. Accordingly, if simple radiography or tomography of a chest is conducted by means of such a photographic system, it is difficult to simultaneously examine the lung field and the trachea or bronchus overlaid on the thoracic vertebra or heart by a single X-ray photograph. Namely, the X-ray transmission substantially varies among various organs of the chest, and in the X-ray photograph, the film density tends to increase in the order of the thoracic vertebra, the heart and the lung field. The density regions of the photograph are fairly wide. Accordingly, when the radiography is conducted under such an X-ray exposure condition that a film density suitable for the examination of the lung field is obtainable, the film density for the thoracic vertebra and the heart will be inadequate because of the absorption of X-rays by these organs, whereby trachea or bronchus overlaid on these organs can not be observed. Contrary, when the radiography is conducted under such an X-ray exposure condition that a film density suitable for the examination of the trachea or bronchus is obtainable, the film density for the lung field tends to be excessive, and the examination of the lung field becomes impossible.

For the above-mentioned reasons, it has been common to take a plurality of X-ray photographs under various X-ray exposure conditions most suitable to the lung field, and the trachea or bronchus, respectively, so as to obtain photographs having film densities suitable for the lung field, and the trachea or bronchus, respectively, or to conduct the diagnosis of a thoracic desease by examining the chest X-ray photograph in combination with bronchography by means of a contrast medium. However, to take a plurality of X-ray photographs is undesirable because the exposure dose to the patient will thereby be increased. Whereas, the brochographic X-ray radiography has drawbacks that it tortures the patient, and it requires time and costs several times as compared with the simple radiography.

In order to solve such problems, it has been proposed to use a gradient intensifying screen i.e. an intensifying screen with a speed partially varied. As such a gradient intensifying screen, there has been proposed a type wherein the speed is complemented by partially varying the thickness of the fluorescent layer, a type wherein the speed is complemented by partially improving the speed by providing a light reflecting layer composed of e.g. a white pigment at such a part between the support and the fluorescent layer, a type wherein the speed is complemented by means of phosphors having different luminance, or a type wherein the speed is complemented by providing a light absorbing layer composed of a coloring agent having a color such as black, blue or red, partially between the support and the fluorescent layer to reduce the speed at such a part. However, the gradient intensifying screens

2

of such types have a drawback that the boundary line between the high speed portion and the low speed portion tends to be distinct because of the technical difficulty in their preparation, whereby in an X-ray photograph taken by means of such intensifying screen, the boundary line where the film density varies abruptly, will appear, which adversely affects the diagnosis. Further, it is not easy to produce gradient intensifying screens of such types to meet desired specifications, and in their mass production, it is not easy to produce a number of products having a uniform quality.

It is an object of the present invention to provide a gradient intensifying screen and a method for producing thereof by which it is possible to suppress in an X-ray photograph boundary lines where the film density varies abruptly.

According to the present invention, the gradient intensifying screen is characterized in that the concentration of the dyestuff varies along the plane of the protective layer so that there is a gradual transition in light transmissivity between areas having a high light absorbance and a low light absorbance.

A process for producing said gradient intensifying screen is characterized by partially immersing the intensifying screen in a dyestuff solution and then by taking said screen out.

Now, the present invention will be described in detail with reference to the preferred embodiments.

In the accompanying drawings, Figures 1 to 8 are plan views of various gradient intensifying screens according to the present invention.

Figure 9 is a perspective view illustrating an intensifying screen in the process for the preparation.

Figure 10 is a plan view of a gradient intensifying screen of the present invention.

Figure 11 is a graph showing the film density of an X-ray photograph obtained by means of the intensifying screen of Figure 10.

Figures 12 (a) and (b) are plan views of gradient intensifying screens of the present invention.

In the intensifying screen of the present invention, the support and the fluorescent layer may be those which are commonly used in the conventional intensifying screens. As the transparent protective layer in the intensifying screen of the present invention, there may be employed the same protective layer as used in the conventional intensifying screens. Particularly preferred are cellulose acetate, cellulose acetate butyrate, polymethacrylate and polyethylene terephthalate.

As the dyestuff which may be used for the dyeing to have the light transmission of the transparent protective layer varied, there may be mentioned an acid dye, a basic dye or an azo dye. As the acid dye, Naphthol Yellow or Metanil Yellow is particularly preferred. As the basic dye, Methylene Blue or Rhodamine B is particularly preferred. As the azo dye, Methyl Orange is particularly preferred. Two or more dyestuffs may be used in combination. These dyestuffs may be used in the form of a solution having a proper concentration, e.g. an aqueous solution. The dyeing can be conducted simply by immersing an intensifying screen in such a solution. No assisting agent is required, and no boiling for the dyeing is required, whereby no adverse effects will be imparted to the intensifying screen. By using these dyestuffs, the intensifying screen can be dyed to have an adequate density, and it is thereby possible to increase the ratio of the maximum value to the minimum value of the partial light transmittance. For instance, the ratio can be made as high as from 2 to 10. The degree of dyeing is dependent on the temperature and concentration of the dyestuff solution, the immersion time, etc. Accordingly, the immersing time of the transparent protective layer in the dyestuff solution can be partially varied by adequately slowly conducting the immersion of the intensifying screen in the dyestuff solution and the taking it out, whereby the degree of dyeing in the protective layer can be varied.

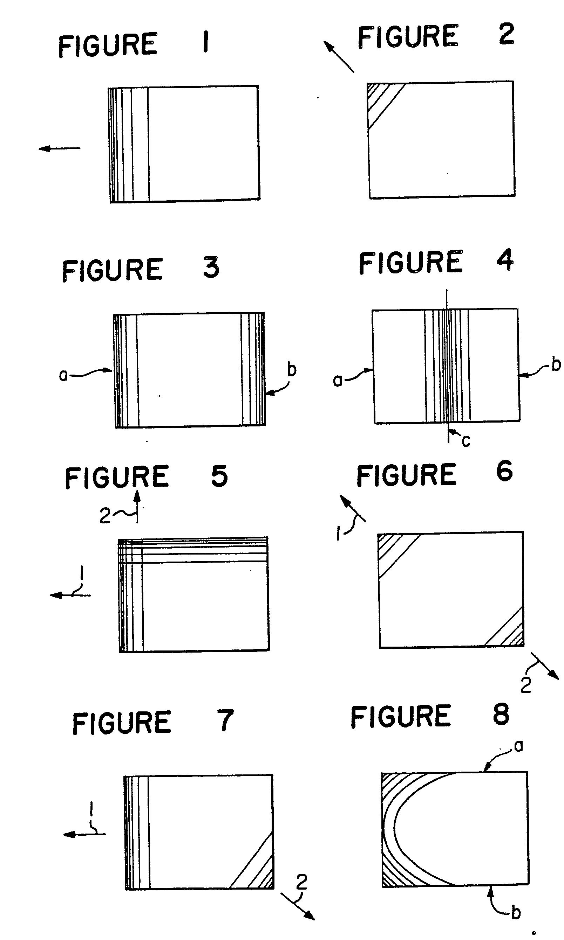

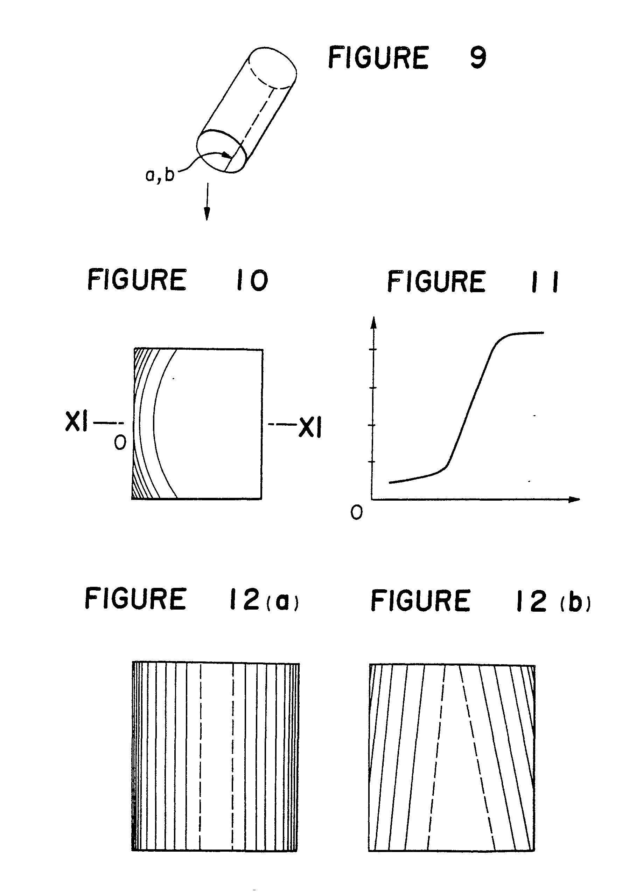

Specific examples of the gradient intensifying screens of the present invention thus obtained, are shown in Figures 1 to 8 in the respective plan views. In these Figures, the rectangular shapes represent the shapes of the intensifying screens, and the degree of dyeing with the dyestuff is represented by the density of the lines within the rectangular shapes. Figures 1 and 2 show specific examples in which an intensifying screen is dipped in a dyestuff solution in a flat state to a predetermined depth in the direction as shown by the arrow, and then gradually taken out. The specific example in Figure 3 is the one obtained by forming an intensifying screen into a cylindrical shape so that sides (a) and (b) of the intensifying screen form a joint portion, then gradually immersing the cylindrical intensifying screen into a dyestuff solution to a predetermined depth with the joint portion located below, and gradually taking it out. The specific example in Figure 4 is the one obtained by forming an intensifying screen into a cylindrical shape so that its sides (a) and (b) form a joint portion, then gradually immersing the cylindrical intensifying screen into a dyestuff solution to a predetermined depth with the portion of line (c) located below, and gradually taking it up. The specific examples in Figures 5 to 7 are those obtained by gradually immersing intensifying screens into a dyestuff solution in a flat state to a predetermined depth in the direction as shown by the arrow 1, gradually taking it up, then gradually immersing the intensifying screens into a dyestuff solution in a flat state to a predetermined depth in the direction indicated by the arrow 2, and then gradually taking it up. The specific example in Figure 8 is the one obtained by forming an intensifying screen into a cylindrical shape so that its sides (a) and (b) form a joint portion as shown in Figure 9, gradually immersing the cylindrical intensifying screen into a dyestuff solution to a predetermined depth in the direction of the arrow shown in Figure 9 (namely the cylindrical shape being inclined), and gradually taking it up.

Other than the above, it is possible to obtain gradient intensifying screens having various patterns with various degrees of the partial dyeing by varying the manner for the deformation of the intensifying screen or by varying the manner of the immersion into the dyestuff solution or the manner of the taking out.

Now, the present invention will be described in further detail with reference to Examples.

However, it should be understood that the present invention is by no means restricted by these specific Examples.

## Example 1

A gradient intensifying screen similar to the one shown in Figure 8 was prepared by using an intensifying screen (size: 200 mm × 251 mm) having $CaWO_4$ phosphor coated in an amount of 50 mg/cm² and a transparent protective layer of cellulose acetate formed thereon and by using Methyl Orange (saturated aqueous solution) as the dyestuff. The plan view is shown in Figure 10. This gradient intensifying screen has a highly dyed protective layer at the left hand side and a non-dyed protective layer at the right hand side. Accordingly, in this gradient intensifying screen, the intensifying degree is low at the left hand side and high at the right hand side. Figure 11 shows the X-ray film density (i.e. the intensifying degree) when X-ray radiation was applied uniformly to the radiographic system using this intensifying screen. The values in Figure 11 were obtained from the measurement along line XI—XI in Figure 10.

This gradient intensifying screen is useful for cephalometric roentgenography. When the cephalometric roentgenography was conducted under usual conditions with use of this gradient intensifying screen, the skull was photographed with a proper density as in the conventional case, and it was possible to have the soft tissues such as the nose and head photographed distinctly with clear densities. Further, the dyed color strength of the protective layer varied continuously, whereby no boundary line where the film density varied abruptly due to a cause other than the object to be photographed, appeared in the X-ray radiography. Thus, it was possible to examine the X-ray photograph under satisfactory conditions.

## Example 2

By using the same intensifying screen (size: 353 mm × 353 mm) as in Example 1 except that $Gd_2O_2S$:Tb was used as the phosphor instead of $CaWO_4$ and Rhodamine B (saturated aqueous solution) as the dyestuff, the intensifying screen was dyed slightly over the entire surface, and then dyed in the same manner as in Figure 3 or Figure 7, to obtain two gradient intensifying screens. Their plan views are shown in Figures 12 (a) and (b). These gradient intensifying screens have highly dyed protective layers at both the left and right hand sides and slightly dyed protective layers at the center portions. Thus, in these gradient intensifying screens, the intensifying degree is low at both the left and right hand sides, and high at the respective center portions.

This gradient intensifying screen is useful for chest radiography. The chest radiography was conducted under usual conditions by using the intensifying screen of Figure 12 (a) for the front side and the intensifying screen of Figure 12 (b) for the back side, whereby both the lung field and the trachea or bronchus overlaid on the thoracic vertebra or heart are photographed distinctly with clear densities. Further, the dyed color strength of the protective layer is varied continuously, whereby no boundary line where the film density changes abruptly due to a cause other than the object to be photographed, will appear in the X-ray photograph. Thus, the examination of the X-ray photograph was conducted under satisfactory conditions.

As discussed in the foregoing, according to the present invention, it is possible to obtain a gradient intensifying screen having an intensifying characteristic of a desired pattern, and it is possible to have the intensifying degree at the boundary between the high speed portion and the low speed portion easily and continuously varied. Accordingly, by means of the gradient intensifying screen of the present invention, it is possible to photograph various portions differing substantially in the X-ray transmission, in a substantially the same density suitable for examination, the entire object can adequately be examined by a single photograph. Further, for example, in the case where a human body is photographed, it is possible to minimize the X-ray exposure dose against the human body.

## Claims

1. A gradient intensifying screen comprising a support, a fluorescent layer formed on the support and a transparent protective layer formed on the fluorescent layer, wherein the transparent protective layer is dyed with a light absorbing dyestuff, characterized in that the concentration of the dyestuff varies along the plane of the protective layer so that there is a gradual transition in light transmissivity between areas having a high light absorbance and a low light absorbance.

2. The gradient intensifying screen according to Claim 1, characterized in that the transparent protective layer is made of cellulose acetate, cellulose acetate butyrate, polymethacrylate or polyethylene terephthalate.

3. The gradient intensifying screen according to Claim 1, characterized in that the dyestuff is an acid dye, a basic dye, or an azo dye.

4. A process for producing a gradient intensifying screen according to Claim 1, characterized by partially immersing the intensifying screen in a dyestuff solution and then by taking said screen out.

5. The process according to Claim 4, characterized in that the immersion and taking out of the intensifying screen are conducted so that the ratio of the maximum value to the minimum value of the partially varied light transmission is from 2 to 10.

## Patentansprüche

1. Gradientenverstärkungsschirm, umfassend einen Träger, eine auf dem Träger ausgebildete Leuchtstoffschicht und eine auf der Leuchtstoffschicht ausgebildete transparente Schutzschicht, wobei die transparente Schutzschicht mit einem lichtabsorbierenden Farbstoff angefärbt ist, dadurch gekennzeichnet, daß die Konzentration des Farbstoffes sich entlang der Ebene der Schutzschicht derart verändert, daß ein gradueller Übergang bei der Lichtdurchlässigkeit zwischen Bereichen mit einer hohen Lichtabsorbtion und Bereichen mit einer niedrigen Lichtabsorbtion vorliegt.

2. Gradientenverstärkungschirm gemäß Anspruch 1, dadurch gekennzeichnet, daß die transparente Schutzschicht aus Celluloseacetat, Celluloseacetatbutyrat, Polymethacrylat oder Polyethylenterephthalat hergestellt ist.

3. Gradientenverstärkungschirm gemäß Anspruch 1, dadurch gekennzeichnet, daß der Farbstoff ein Säurefarbstoff, ein basischer Farbstoff oder ein Azofarbstoff ist.

4. Verfahren zur Herstellung eines Gradientenverstärkungsschirms gemäß Anspruch 1, dadurch gekennzeichnet, daß man den Verstärkungsschirm teilweise in eine Farbstofflösung eintaucht und anschließend den Schirm herausnimmt.

5. Verfahren gemäß Anspruch 4, dadurch gekennzeichnet, daß man das Eintauchen und Herausnehmen des Verstärkungsschirms derart durchführt, daß das Verhältnis des Maximalwerts zu dem Minimalwert der teilweise variierten Lichtdurchlässigkeit von 2 bis 10 beträgt.

## Revendications

1. Ecran renforçateur à gradient comprenant une support, unc couche fluorescente formée sur le support et une couche protectrice transparente formée sur la couche fluorescente, dans lequel la couche protectrice transparente est teinte au moyen d'une matière colorante absorbant la lumière, caractérisé en ce que la concentration de la matière colorante varie le long du plan de la couche protectrice de manière à ce qu'il y ait une transition progressive de la transmission lumineuse entre des superficies ayant une absorption lumineuse élevée et une absorption lumineuse faible.

2. Ecran renforçateur à gradient suivant la reven dication 1, caractérisé en ce que la couche protectrice transparente est faite d'acétate de cellulose, d'acétobutyrate de cellulose, de poly méthacrylate ou de polyéthylène téréphtalate.

3. Ecran renforçateur à gradient suivant la reven dication 1, caractérisé en ce que la matière colorante est un colorant acide, un colorant basique ou un colorant azoïque.

4. Procédé de production d'un écran renforçateur à gradient suivant la revendication 1, caractérisé par l'immersion partielle de l'écran renforçateur dans une solution de matière colorante et ensuite par l'extraction de cet écran.

5. Procédé suivant la revendication 4, caractérisé en ce que l'immersion et l'extraction de l'écran renforçateur sont réalisées de manière à ce que le rapport de la valeur maximale à la valeur minimale de la transmission lumineuse partiellement modifiée soit de 2 à 10.

EP 0 158 787 B1

FIGURE 1

FIGURE 2

FIGURE 3

FIGURE 4

FIGURE 5

FIGURE 6

FIGURE 7

FIGURE 8

1

FIGURE 9

a,b

FIGURE 10

XI—
O

XI

FIGURE 11

O

FIGURE 12(a)

FIGURE 12(b)